# EUROPEAN PATENT APPLICATION

(11) **EP 4 790 381 A2**
(43) Date of publication of application: **12.08.2026**
(21) Application number: 26155710.2
(22) Date of filing: 02.02.2026
(51) Int. Cl.: G01M 13/023, G01M 17/007

(54) **KIT FOR ATTACHING COMPONENTS TO A ROTATING BELT ASSEMBLY**

(30) Priority: 05.02.2025 US 202563754342 P; 26.01.2026 US 202619459441
(71) Applicant: Illinois Tool Works Inc., Glenview, IL 60025 (US)
(72) Inventor: AMY, Richard, Glenview, 60025 (US); FINNEGAN, Quinn, Glenview, 60025 (US); MAKI, Anders, Glenview, 60025 (US); MARQUETTE JR., Wesley, Glenview, 60025 (US)
(74) Representative: HGF

(57) **Abstract**

A kit for attaching to a rotating belt assembly includes a drive roller and an idler roller spaced from the drive roller and an endless belt that is supported and rotated in a direction of travel about the drive roller and the idler roller. The kit includes a fixture configured to be positioned on endless belt and move therewith, wherein the fixture is configured to retain one or more components. The kit includes one or more straps configured to engage the fixture, wherein each of the one or more straps is configured to create at least a partial loop about the endless belt, wherein each of the one or more straps is in tension.

## Description

### CROSS-REFERENCE TO RELATED APPLICATION(S)

The present application is based on and claims the benefit of U.S. provisional patent application Serial No. 63/754,342, filed February 5, 2025, the content of which is hereby incorporated by reference in its entirety.

### BACKGROUND

The discussion below is merely provided for general background information and is not intended to be used as an aid in determining the scope of the claimed subject matter.

The present disclosure relates to a kit for attaching components to a rotating belt assembly. More particularly, the present disclosure relates to a kit that retains components to the belt while the belt is moving at least partially in an arcuate path.

Rotating belt assemblies, such as but not limited to roadway testing machine, typically include a belt that move in paths about two or more rollers at relatively high speeds. There are many instances when a user would like to position a sensor and/or associated equipment on the belt to monitor and/or determine process conditions or variables, including but not limited to, forces imparted on the belt by an object, such as a tire.

However, the high speeds of the belt, especially when moving in an arcuate path about the one or more rollers, causes forces to be imparted onto the sensor or associated equipment, which can cause the sensor and or associated equipment to be dislodge from the moving belt. In some instances, an adhesive, such as an epoxy, can be used to adhere the sensor and/or associated equipment to the rotating belt. However, in order to provide the necessary adhering strength, the adhesive is substantially rigid. The rigidity of the adhesive as the belt rotates in the arcuate path about the roller causes the bond between the adhesive and the sensor and/or associated equipment to decouple from the belt. Once decoupled, the sensor and/or associated equipment can be thrown from the rotating belt.

### SUMMARY

An aspect of the present disclosure relates to a kit for attaching to a rotating belt assembly that includes a drive roller and an idler roller spaced from the drive roller and an endless belt that is supported and rotated in a direction of travel about the drive roller and the idler roller. The kit includes a fixture configured to be positioned on endless belt and move therewith, wherein the fixture is configured to retain one or more components. The kit includes one or more straps configured to engage the fixture, wherein each of the one or more straps is configured to create at least a partial loop about the endless belt, wherein each of the one or more straps is in tension.

Another aspect of the present disclosure relates to a kit for attaching to a rotating belt assembly where the rotating belt assembly including a drive roller and an idler roller spaced from the drive roller and an endless belt that is supported and rotated in a direction of travel about the drive roller and the idler roller. The kit includes a fixture configured to be positioned and retained on the endless belt. The fixture includes a middle portion configured to retain one or more components, where the middle portion comprising a leading portion and a trailing portion in reference to the direction of travel. The fixture includes a leading mounting bracket movably coupled to the leading portion of the middle portion, and a trailing mounting bracket moveably coupled to the trailing portion of the middle portion.

Another aspect of the present disclosure relates to a kit for attaching to a rotating belt assembly where the rotating belt assembly including a drive roller and an idler roller spaced from the drive roller and an endless belt that is supported and rotated in a direction of travel about the drive roller and the idler roller. The kit includes a fixture configured to be retained on endless belt with an adhesive bond, wherein the fixture is configured to retain one or more components. The adhesive bond includes a first adhesive layer attached to the fixture, a second adhesive layer attached to the endless belt, and a compliant middle layer secured between the first adhesive layer and the second adhesive layer.

### BRIEF DESCRIPTION OF THE DRAWINGS

FIG. 1 is a schematic view of a roadway testing machine having a fixture of the present disclosure attached to a continuous belt.
FIG. 2 is a perspective view of a three-belt testing machine where each belt has a fixture of the present disclosure attached to each belt.
FIG. 3 is a close-up view of the fixture attached to the belt with continuous looped straps.
FIG. 4 is a close-up view of the fixture attached to the belt with ends of straps attached to the fixture.
FIG. 5 is a schematic view of the fixture having a double pivot attachment of mounting brackets to a middle portion.
FIG. 6 is a schematic view of the fixture having a single pivot attachment of mounting brackets to a middle portion.
FIG. 7 is a schematic view of the fixture having a single flexure attachment of mounting brackets to a middle portion.
FIG. 8 is a schematic view of the fixture having a double flexure attachment of mounting brackets to a middle portion.
FIG. 9 is a schematic view of the fixture of FIG. 5 having a multi-layer adhesive bond.
FIG. 10 is a view of a flexible fixture attached to a rotating belt with a plurality of straps.
FIG. 11 is a side view of a fixture attached to a rotating belt with a plurality of flexible straps having end portions secured to the belt with adhesive.

### DETAILED DESCRIPTION

The present disclosure relates to a kit that is configured to couple equipment associated with a sensor to a rotating belt that moves in a path about at least two rollers. In a non-limiting example, the rotating belt is a roadway assembly. The kit includes a fixture that is configured to retain equipment associated with the sensor within an interior space while the fixture is retained to the rotating belt. The fixture typically has a relatively low profile and is located proximate the belt to minimize forces exerted on the fixture, for instance as the fixture moves in an arcuate path about the at least two rollers.

The kit includes one or more such as a plurality of straps that engage the fixture where each of the plurality of straps is retained in tension about the rotating belt. The plurality of straps aid in counteracting the forces on the fixture as the fixture moves in the arcuate path about the rollers and retains the fixture to the belt.

The kit can also include an adhesive bond to adhere the fixture to the rotating belt. In an exemplary embodiment, the adhesive bond includes a multi-layer bond where an interior layer is compliant and/or flexible while a first layer adhering the belt to the interior layer and a second layer adhering the fixture to the interior layer are substantially rigid. The first and second layers provide the necessary bond strength to retain the fixture to the belt, as the belt rotates about the one or more rollers in the arcuate path. The interior layer being formed of a compliant material, such as a rubberized material, a plasticized polymer, or an elastomeric material or the like, allows the first and second layers to move relative to each other to mitigate stresses, strains and forces on the first and second layers as the fixture moves in the arcuate path with the belt as the belt moves about the at least two rollers.

In one embodiment, sensors are typically attached across a width of the belt transverse to a direction of travel and are relatively low profile so as to minimize changes in the engagement of an item, such as a tire, with the belt. However, additional equipment can be required to effectively use the sensor. By way of example, a power supply, such as a battery, can be needed to be proximate the sensor. Other additional equipment could be required, such as, but not limited to, a transmitter, receiver or transceiver, such as a radio frequency identification (RFID) transmitter used to transmit sensed process conditions to a controller. In other embodiments, the additional equipment can include memory that can be used to store sensed data for future analysis. In yet other embodiments, the additional equipment that is retained within the fixture can include equipment configured to receive signals correlating to a sensed process variable from the sensors. The listed additional equipment is exemplary in nature and the fixture of the present disclosure can be utilized to retain any equipment that is desired to travel about the path of the belt about the at least two rollers.

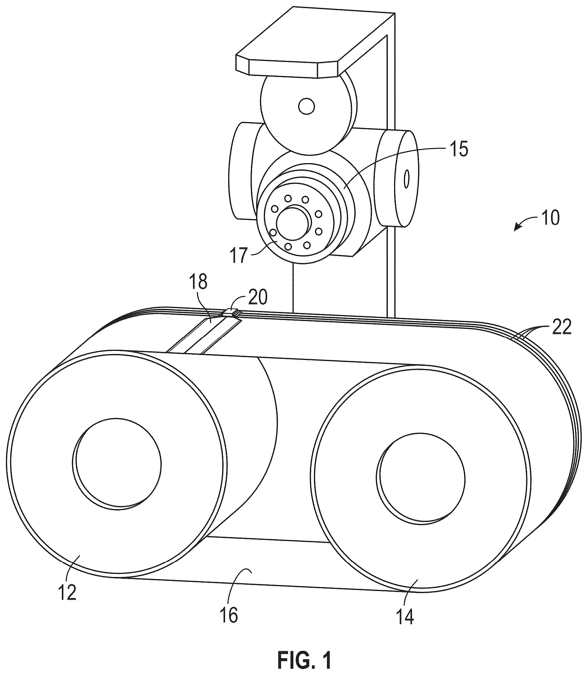

Referring to FIG. 1, a roadway assembly is schematically illustrated in FIG. 1 at 10. The roadway assembly includes spaced apart rollers 12 and 14, where one roller is typically a drive roller and the other roller is an idler roller. Additional components of the roadway assembly have been omitted since they are not relevant to the present invention. A continuous belt 16 is positioned about the spaced apart rollers 12 and 14, where the continuous belt 16 is configured to accept a tire retained on a hub 17 on a spindle 15.

A sensor 18 is attached to the continuous belt 16, typically in a direction transverse to a direction of travel. A fixture 20 is secured to the continuous belt 16 proximate the sensor 18, where the fixture 20 is configured to retain additional equipment or items associated with the sensor 18, as discussed above. As illustrated, the fixture 20 is retained to the continuous belt 16 with one or more such as a plurality of straps 22 that engage the fixture 20 while in tension about the continuous belt 16. While not illustrated in FIG. 1, the fixture 20 can also be attached to the belt with a multi-layer adhesive bond with or without the use of a strap depending on the operation of the continuous belt 16.

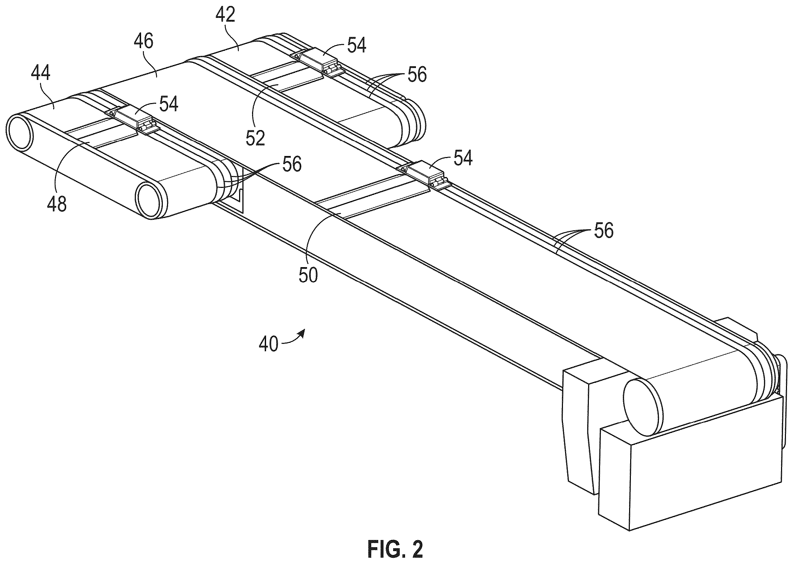

The kit of the present disclosure can also be utilized on continuous belt testing equipment besides a roadway simulator for a tire as illustrated in FIG. 1. Referring to FIG. 2, a three-belt simulator 40 for use in a wind tunnel is illustrated. The three-belt simulator 40 includes a left belt 42, a right belt 44 and a middle belt 46 where each belt is retained in tension about spaced apart rollers. Sensors 48, 50 and 52 is attached to the respective continuous belts 42, 44 and 46.

A fixture 54 is attached to each of the continuous belts 42, 44 and 46, where the fixture 54 is configured to retain equipment or items associated with the respective sensor 48, 50 and 52. The fixture 54 is secured to each of the continuous belts 42, 44 and 46 with one or more such as a plurality of straps 56 that engage the fixture 54 and are retained in tension as loops about the continuous belts 42, 44 and 46. While not illustrated in FIG. 2, the fixtures 54 can also be retained to the continuous belts 42, 44 and 46 with a multi-layer adhesive bond. While the present disclosure illustrates the fixture and retention devices being used with a one-belt and a three-belt testing equipment, the present disclosure can be used with testing equipment having any number of belts. For instance, in the embodiment of Fig. 2 one set of tires and wheels of a vehicle can be supported by the side belts. If desired, another set of belts can be spaced apart from the set shown to support for tires and wheels of another axle of the vehicle. Likewise, the side belts shown can be of length to support all tires and wheels on a side of a vehicle. The center belt may not need a sensor in such a configuration with side belts present. However, in another embodiment, the side belts are not present a single belt such as belt 46 is used to support all tires and wheels of the vehicle. Aspects of the invention also can be used in applications beyond that of vehicle testing equipment or beyond testing equipment in general.

The fixture 54 and the plurality of straps 56 can be provided as a kit for a user to place on a continuous belt. In other embodiments, the kit can include the fixture 54, the one or more such as the plurality of straps 56 and optionally the adhesive(s) need to create the multi-layer adhesive bond between one of the continuous belts 42, 44 and 46 and the fixture 54.

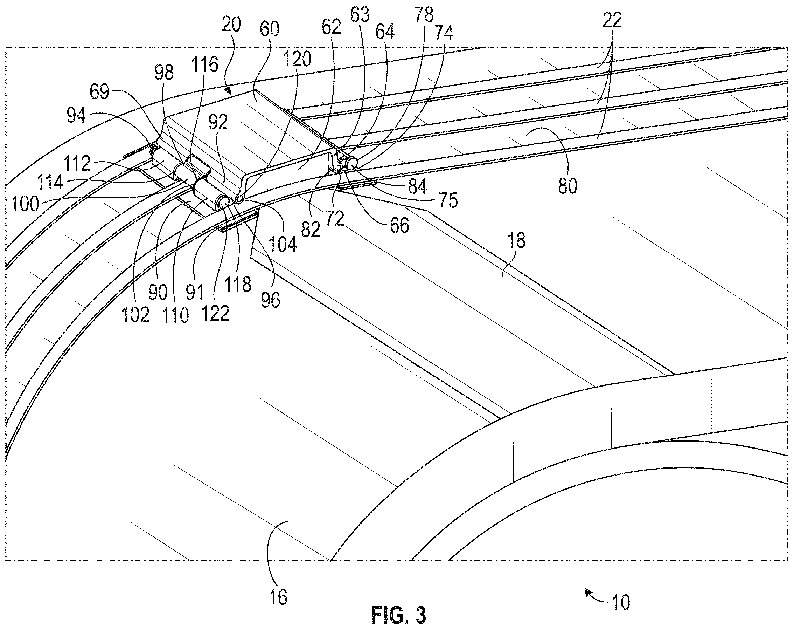

Referring to FIG. 3, the fixture 20 on the roadway assembly 10 of FIG. 1 is illustrated where the fixture 20 is secured to the continuous belt 16 with the plurality of straps 22 by way of example. As illustrated, the plurality of straps 22 are in in tension about the continuous belt 16 and engage and retain the fixture 20 to the continuous belt 16. The plurality of straps 22 can be of any suitable material that is sufficiently flexible to conform to a configuration of the belt 16 while sufficiently strong to withstand forces created as the fixture 20 travels with the continuous belt 16, especially in the arcuate paths around the rollers 12 and 14. Exemplary, non-limiting materials of construction of the straps include metal, polymer-based materials and combinations thereof. As illustrated, the kit includes three straps 22. However, the kit can include one or more straps to secure the fixture 20 to the belt 16.

The fixture 20 includes a middle portion 60 having an interior cavity 62 configured to retain additional equipment associated with the sensor 18 therein as discussed above. The middle portion 60 includes a leading portion 63 in a direction of travel having spaced apart tabs, one of which is illustrated at 64 (similar to tabs 110 discussed below), where the spaced apart tabs 64 include aligned through bores 66. A connecting member is positioned between the spaced apart tabs 64 where a through bore in the connecting member aligns with the through bores 66 in the spaced apart tabs 64. A pin 72 is positioned through the through bore in the connecting member and the aligned through bores 66 in the spaced apart tabs 64.

A leading mounting bracket 74 has a substantially flat bottom surface 75 that interfaces with the continuous belt 16 for example with an optional a multi-layer adhesive bond. The leading mounting bracket 74 includes spaced apart tabs 76 with aligned through bores 80. Another portion of the connecting member is positioned between the spaced apart tabs 76 where a through bore in the connecting member aligns with the through bores 80 in the spaced apart tabs 76. A pin 82 then inserted through the aligned through bores 80 and the through bore in the connecting member to couple the leading mounting bracket 74. The pins 72 and 82 create pivot axes 84 and 86 that allow the leading mounting bracket 74 to move and rotate relative the fixture 20

The fixture 20 includes a trailing mounting bracket 90 that is attached to a trailing portion 65 of the middle portion 60 with a similar double pivot mechanism as described with respect to the leading mounting bracket 74. The middle portions 60 include spaced apart tabs 92 and 94 having aligned through bores 96 and 98. A connecting member 100 is positioned between the spaced apart tabs 92 and 94 and includes a through bore 102 that is aligned with the through bores 96 and 98. A pivot pin 104 that is positioned through the through bores 96 and 98 in the spaced apart tabs 92 and 94 and the through bore 102 in the connecting member 100 to pivotally secure the connecting member 100 to the middle portion 60.

The trailing mounting bracket 90 include a substantially flat bottom surface 91 that interfaces with the continuous belt 16 for example with an optional a multi-layer adhesive bond. The trailing mounting bracket 90 includes spaced apart tabs 110 and 112 having aligned through bores 114. Another portion of the connecting member 100 is positioned between the spaced apart tabs 110 and 112 where the connecting member includes a through bore 116 that aligns with the through bores 114. A pivot pin 118 is inserted through the aligned through bores 114 and 116 to pivotally attach the trailing mounting bracket 90 to the connecting member 100. The pins 104 and 118 define pivot axes that allow the trailing mounting bracket 90 and the middle portion 60 to move relative to each other as the fixture 20 travels with the belt 16.

In the embodiment illustrated, the plurality of straps 22 are spaced apart and positioned over the leading mounting bracket 74 and the trailing mounting bracket 90. The middle strap of the plurality of straps is positioned under the middle portion 60 along a midplane while the outer straps of the plurality of straps 22 engage the leading mount bracket 74 and the trailing mounting bracket 90 proximate edges thereof.

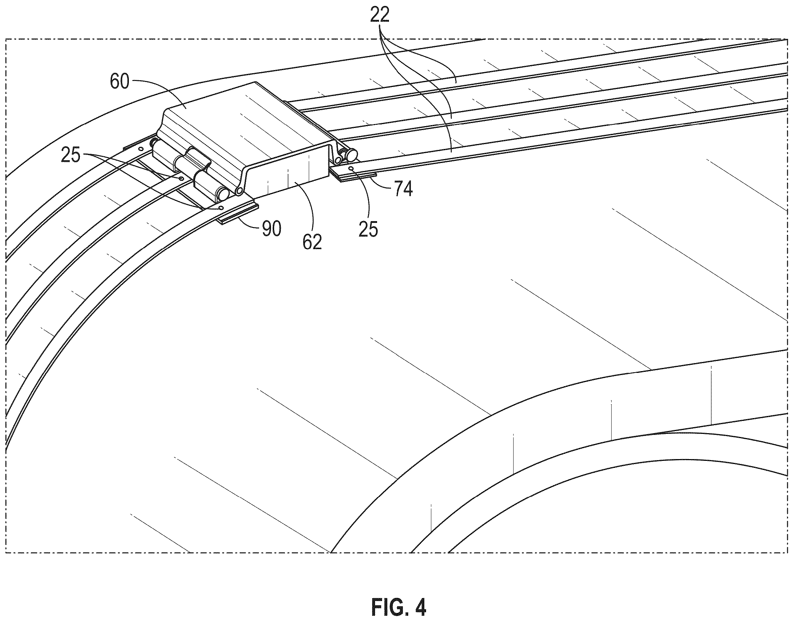

As illustrated the plurality of straps 22 form at least partial continuous loops in tension about the continuous belt 16 to retain the fixture 20 thereto. However, referring to FIG. 4, end 21 and 23 of the plurality of straps 22 can be attached to the leading mounting bracket 74 and the trailing mounting bracket 90 with rivets 25 while the plurality of straps 22 are in tension to retain the fixture 20 to the continuous belt 16. While rivets 25 are disclosed and illustrated, other fastening mechanism are within the scope of the present disclosure including but not limited to, adhesives, cements, epoxies, and combinations thereof, a threaded engagement and clamping devices.

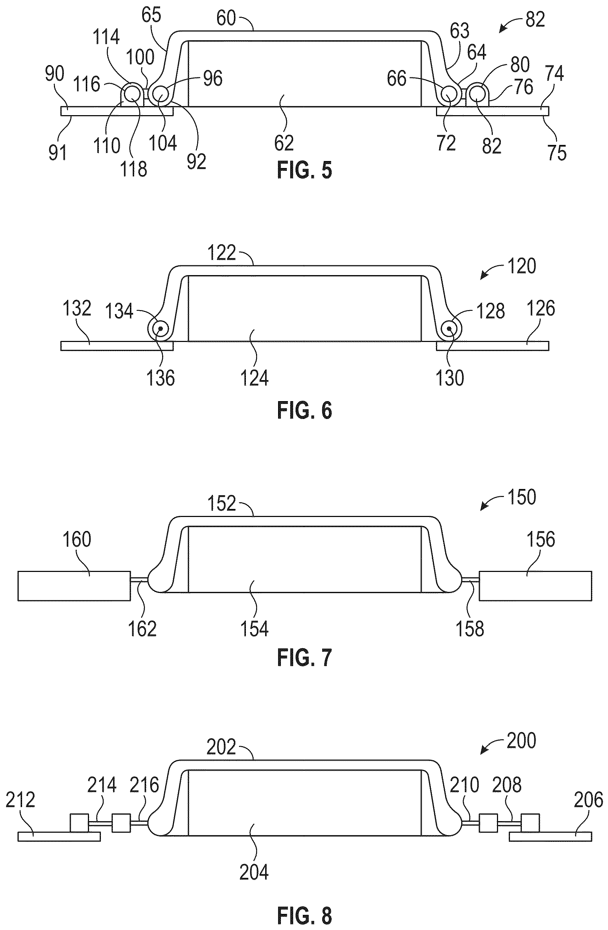

Referring to FIG. 5, the fixture 20 is illustrated with the middle portion 60 connected to the leading mounting bracket 74 with the pins 82 and 84 to form a double pivoting connection. Similarly, the trailing mounting bracket 90 is illustrated attached to the middle portion 60 with the pins 104 and 118 to form another double pivoting connection.

Referring to FIG. 6, another embodiment of the fixture is illustrated at 120. The fixture 120 includes the middle portion 122 having an interior cavity 124 configured to retain additional equipment for a sensor as discussed above. The fixture 120 includes a leading mounting bracket 126 that is pivotally connected to the middle portion 122 with a single pin 128 having a pivot axis 130. A trailing mounting bracket 132 is pivotally attached to the middle portion 122 with another pin 134 having a pivot axis 136. As such, the leading mounting bracket 126 and the trailing mounting bracket 132 attach to the middle portion 122 with a single pivotal connection instead of the double pivoting connection illustrated in FIG. 5.

Referring to FIG. 7, another embodiment of the fixture is illustrated at 150. The fixture includes a middle portion 152 with a cavity 154 configured to house and retain additional equipment for a sensor. The fixture 150 includes a leading mounting bracket 156 that is attached to the middle portion 152 with a first flexure area 158 that retains the leading mounting bracket 156 to the middle portion 152 while being sufficiently thin to flex to allow the leading mounting bracket 156 to move relative to the middle portion 152. The fixture 150 includes a trailing mounting bracket 160 that attaches to the middle portion with a second flexure area 162 that also is sufficiently thin to flex to allow the trailing mounting bracket 160 to move relative to the middle portion 152

Referring to FIG. 8, another embodiment of a fixture is illustrated at 200. The fixture 200 includes a middle portion 202 with a cavity 204 configured to house and retain additional equipment for a sensor. The fixture 200 includes a leading mounting bracket 206 that is attached to the middle portion 202 with first spaced apart flexure areas 208 and 210 that retain the leading mounting bracket 206 to the middle portion 202 while being sufficiently thin to flex to allow the leading mounting bracket 206 to move relative to the middle portion 202. The fixture 200 includes a trailing mounting bracket 212 that attaches to the middle portion 202 with second spaced apart flexure areas 214 and 216 that also is sufficiently thin to flex to allow the trailing mounting bracket 212 to move relative to the middle portion 202.

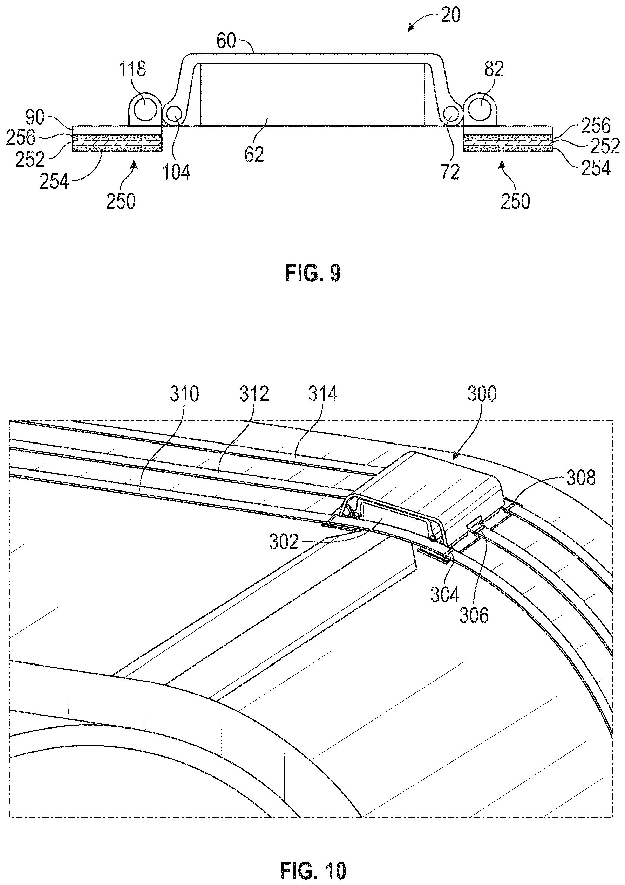

Referring to FIG. 9, the fixture 20 of FIG. 3 is illustrated where the leading mounting bracket 74 and the trailing mounting bracket 90 are secured to the continuous belt 16 with a multi-layer adhesive bond 250 with or without one or more straps (not shown). The multi-layer adhesive bond 250 includes an interior layer 252 that is constructed of a compliant material. Exemplary materials of construction of the interior layer 252 include, but are not limited to, a rubberized material, a plasticized polymer, or an elastomeric material or the like and combinations thereof. A first layer 254 adheres the belt 16 to the interior layer 252 and a second layer 256 adheres the leading mounting bracket 74 and the trailing mounting bracket 90 to the interior layer 252. The first and second layers 254 and 256 are constructed of a suitable adhesive, such as an epoxy or a cement, that provides the strength to adhere to the belt 16 and the leading mounting bracket 74 and the trailing mounting bracket 90 to retain the fixture 20 to the belt 16, as the belt 16 rotates about the one or more rollers in the arcuate path. The interior layer 252 constructed of compliant material allows the first and second layers 254 and 256 to move relative to each other to mitigate stresses, strains and forces on the first and second layers as the fixture 20 moves in the arcuate path as the belt 16 moves about the at least two rollers 12 and 14.

Referring to FIG. 10, another embodiment of the kit is illustrated where the fixture 300 is constructed of a compliant and/or flexible material hence allowing the fixture to bend if necessary when traveling with the belt 16. The fixture 300 includes the interior cavity 302 configured to retain additional equipment as discussed above. The fixture 300 includes spaced apart slots 304, 306 and 308 that receive one or more such as a plurality of straps 310, 312 and 314 that aid in retaining the fixture 300 to the continuous belt 16. The fixture 300 can be optionally retained to the belt 16 with the multi-layer adhesive bond with or without one or more straps, as discussed in reference to FIG. 9.

However, the fixture 300 being constructed of a compliant or flexible material substantially conforms to the arcuate path as the fixture 300 travels around the rollers and does not require mounting brackets that are pivotally attached to a middle portion of the fixture 20 or flexures to allow the fixture 300 to move in the arcuate paths about the rollers.

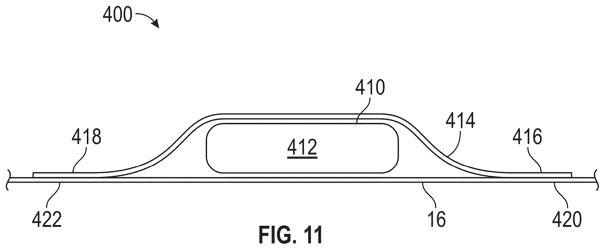

Referring to FIG. 11, another embodiment of the kit is illustrated at 400. The kit 400 includes a fixture 410 configured to retain equipment associated with the sensor within an interior space while the fixture is retained to the rotating belt within an interior cavity 412. The kit 400 includes a plurality of flexible straps, one of which is illustrated at 414. Each of the plurality of straps 414 includes spaced apart end portions 416 and 418 that are secured to a rotating belt 16 with areas of adhesive 420 and 422. In some embodiments, the areas of adhesive 420 and 422 are constructed of the multi-layer adhesive bond as illustrated in FIG. 9.

The plurality of flexible straps 414 are secured to the rotating belt in tension such that the fixture 410 is retained to the belt 16, as the belt rotates about the plurality of rollers. As the fixture 410 and the plurality of straps 414 move on the belt 16 in arcuate paths about the rollers, the areas of adhesive 420 and 422 and the plurality of straps 414 flex to retain the fixture 410 with the equipment associated with the sensor to the belt 16.

Although the present disclosure has been described with reference to preferred embodiments, workers skilled in the art will recognize that changes may be made in form and detail without departing from the spirit and scope of the disclosure.

Certain embodiments of the invention are described in the following clauses:
Clause 1. A kit for attaching to a rotating belt assembly, the rotating belt assembly including a drive roller and an idler roller spaced from the drive roller and an endless belt that is supported and rotated in a direction of travel about the drive roller and the idler roller, the kit comprising:
   a fixture configured to be positioned on endless belt and move therewith, wherein the fixture is configured to retain one or more components; and
   one or more straps configured to engage the fixture, wherein each of the one or more straps is configured to create at least a partial loop about the endless belt, wherein each of the one or more straps is in tension.
Clause 2. The kit of clause 1, wherein the fixture comprises a flexible material configured to substantially conform to a configuration of the belt while moving about the drive roller and the idler roller.
Clause 3. The kit of clause 1, wherein the fixture comprises:
   a middle portion configured to retain the components, the middle portion comprising a leading portion and a trailing portion in reference to the direction of travel;
   a leading mounting bracket movably coupled to the leading portion of the middle portion; and
   a trailing mounting bracket moveably coupled to the trailing portion of the middle portion.
Clause 4. The kit of clause 3, wherein each of the leading mounting and the trailing mounting bracket are movably coupled to the middle portion with a pivot pin having an axis of rotation that is substantially orthogonal to the direction of travel.
Clause 5. The kit of clause 3, wherein each of the leading mounting and the trailing mounting bracket are movably coupled to the middle portion with spaced apart pivot pins having axes of rotation that are substantially parallel to each other and the axes are substantially orthogonal to the direction of travel.
Clause 6. The kit of clause 3, wherein each of the leading mounting and the trailing mounting bracket are movably coupled to the middle portion with a flexure that flexes in a direction that is substantially orthogonal to the direction of travel.
Clause 7. The kit of clause 3, wherein each of the leading mounting and the trailing mounting bracket are movably coupled to the middle portion with spaced apart flexures that are substantially parallel to each other and the spaced apart flexures flex in a direction that is substantially orthogonal to the direction of travel.
Clause 8. The kit of clause 3, wherein each of the leading mounting bracket and the trailing mounting bracket are secured to the endless belt with an adhesive bond.
Clause 9. The kit of clause 8, wherein the adhesive bond comprises:
   a first adhesive layer attached to the leading mounting bracket and the trailing mounting bracket;
   a second adhesive layer attached to the endless belt; and
   a compliant middle layer secured between the first adhesive layer and the second adhesive layer, wherein the compliant middle layer provides movement in the adhesive bond.
Clause 10. The kit of clause 1, and further comprising a sensor configured to be attached to the endless belt, wherein the fixture is configured to be positioned proximate the sensor, wherein the fixture is configured to retain electronic components configured to receive a signal from the sensor.
Clause 11. A kit for attaching to a rotating belt assembly, the rotating belt assembly including a drive roller and an idler roller spaced from the drive roller and an endless belt that is supported and rotated in a direction of travel about the drive roller and the idler roller, the kit comprising:
   a fixture configured to be retained on endless belt with an adhesive bond, wherein the fixture is configured to retain one or more components, wherein the adhesive bond comprises:
   a first adhesive layer attached to the fixture;
   a second adhesive layer attached to the endless belt; and
   a compliant middle layer secured between the first adhesive layer and the second adhesive layer.
Clause 12. The kit of clause 11, wherein the compliant middle layer comprises a rubberized material, a plasticized polymer or an elastomeric material.
Clause 13. The kit of clause 11, wherein the fixture comprises a flexible material configured to substantially conform to a configuration of the belt while moving about the drive roller and the idler roller.
Clause 14. The kit of clause 11, wherein the fixture comprises:
   a middle portion configured to retain components, the middle portion comprising a leading portion and a trailing portion in reference to the direction of travel;
   a leading mounting bracket movably coupled to the leading portion of the middle portion; and
   a trailing mounting bracket moveably coupled to the trailing portion of the middle portion, wherein the adhesive bond attached the leading mounting bracket and the trailing mounting bracket to the endless belt.
Clause 15. The kit of clause 14, wherein each of the leading mounting and the trailing mounting bracket are movably coupled to the middle portion with a pivot pin having an axis of rotation that is substantially orthogonal to the direction of travel.
Clause 16. The kit of clause 14, wherein each of the leading mounting and the trailing mounting bracket are movably coupled to the middle portion with spaced apart pivot pins having axes of rotation that are substantially parallel to each other and the axes are substantially orthogonal to the direction of travel.
Clause 17. The kit of clause 14, wherein each of the leading mounting and the trailing mounting bracket are movably coupled to the middle portion with a flexure that flexes in a direction that is substantially orthogonal to the direction of travel.
Clause 18. The kit of clause 11, and further comprising:
   one or more straps configured to engage the fixture, wherein each of the one or more straps is configured to create at least a partial loop about the endless belt.
Clause 19. The kit of clause 11, wherein the fixture is configured to retain electronic components configured to receive a signal from a sensor attached to the endless belt.
Clause 20. The kit of clause 11, wherein the rotating belt assembly comprises a roadway assembly.

## Claims

1. A kit for attaching to a rotating belt assembly, the rotating belt assembly including a drive roller and an idler roller spaced from the drive roller and an endless belt that is supported and rotated in a direction of travel about the drive roller and the idler roller, the kit comprising:
a fixture configured to be positioned on endless belt and move therewith, wherein the fixture is configured to retain one or more components; and
one or more straps configured to engage the fixture, wherein each of the one or more straps is configured to create at least a partial loop about the endless belt, wherein each of the one or more straps is in tension.

2. The kit of claim 1, wherein the fixture comprises a flexible material configured to substantially conform to a configuration of the belt while moving about the drive roller and the idler roller.

3. The kit of claim 1, wherein the fixture comprises:
a middle portion configured to retain the components, the middle portion comprising a leading portion and a trailing portion in reference to the direction of travel;
a leading mounting bracket movably coupled to the leading portion of the middle portion; and
a trailing mounting bracket moveably coupled to the trailing portion of the middle portion, and optionally
wherein each of the leading mounting and the trailing mounting bracket are movably coupled to the middle portion with a pivot pin having an axis of rotation that is substantially orthogonal to the direction of travel, or
wherein each of the leading mounting and the trailing mounting bracket are movably coupled to the middle portion with spaced apart pivot pins having axes of rotation that are substantially parallel to each other and the axes are substantially orthogonal to the direction of travel, or
wherein each of the leading mounting and the trailing mounting bracket are movably coupled to the middle portion with a flexure that flexes in a direction that is substantially orthogonal to the direction of travel, or
wherein each of the leading mounting and the trailing mounting bracket are movably coupled to the middle portion with spaced apart flexures that are substantially parallel to each other and the spaced apart flexures flex in a direction that is substantially orthogonal to the direction of travel.

4. The kit of claim 3, wherein each of the leading mounting bracket and the trailing mounting bracket are secured to the endless belt with an adhesive bond, and optionally wherein the adhesive bond comprises:
a first adhesive layer attached to the leading mounting bracket and the trailing mounting bracket;
a second adhesive layer attached to the endless belt; and
a compliant middle layer secured between the first adhesive layer and the second adhesive layer, wherein the compliant middle layer provides movement in the adhesive bond.

5. The kit of any one of the previous claims , and further comprising a sensor configured to be attached to the endless belt, wherein the fixture is configured to be positioned proximate the sensor, wherein the fixture is configured to retain electronic components configured to receive a signal from the sensor.

6. A kit for attaching to a rotating belt assembly, the rotating belt assembly including a drive roller and an idler roller spaced from the drive roller and an endless belt that is supported and rotated in a direction of travel about the drive roller and the idler roller, the kit comprising:
a fixture configured to be retained on endless belt with an adhesive bond, wherein the fixture is configured to retain one or more components, wherein the adhesive bond comprises:
a first adhesive layer attached to the fixture;
a second adhesive layer attached to the endless belt; and
a compliant middle layer secured between the first adhesive layer and the second adhesive layer.

7. The kit of claim 6, wherein the compliant middle layer comprises a rubberized material, a plasticized polymer or an elastomeric material.

8. The kit of claim 6 or claim 7, wherein the fixture comprises a flexible material configured to substantially conform to a configuration of the belt while moving about the drive roller and the idler roller.

9. The kit of any one of claims 6 to 8, wherein the fixture comprises:
a middle portion configured to retain components, the middle portion comprising a leading portion and a trailing portion in reference to the direction of travel;
a leading mounting bracket movably coupled to the leading portion of the middle portion; and
a trailing mounting bracket moveably coupled to the trailing portion of the middle portion, wherein the adhesive bond attached the leading mounting bracket and the trailing mounting bracket to the endless belt.

10. The kit of claim 9, wherein each of the leading mounting and the trailing mounting bracket are movably coupled to the middle portion with a pivot pin having an axis of rotation that is substantially orthogonal to the direction of travel.

11. The kit of claim 9, wherein each of the leading mounting and the trailing mounting bracket are movably coupled to the middle portion with spaced apart pivot pins having axes of rotation that are substantially parallel to each other and the axes are substantially orthogonal to the direction of travel.

12. The kit of claim 9, wherein each of the leading mounting and the trailing mounting bracket are movably coupled to the middle portion with a flexure that flexes in a direction that is substantially orthogonal to the direction of travel.

13. The kit of any one of claims 6 to 12, and further comprising:
one or more straps configured to engage the fixture, wherein each of the one or more straps is configured to create at least a partial loop about the endless belt.

14. The kit of any one of claims 6 to 13, wherein the fixture is configured to retain electronic components configured to receive a signal from a sensor attached to the endless belt.

15. The kit of any one of claims 6 to 14, wherein the rotating belt assembly comprises a roadway assembly.
